# FASCICULE DE BREVET EUROPEEN

(11) **EP 2 070 382 B1**
(45) Date de publication et mention de la délivrance du brevet: **24.02.2016**
(21) Numéro de dépôt: 07823869.8
(22) Date de dépôt: 27.09.2007
(51) Int. Cl.: H04Q 11/00

(54) **PROCEDE DE GESTION DU RACCORDEMENT DANS UN RESEAU D'ACCES OPTIQUE, PLATEFORME, CENTRAL, RESEAU ET PRODUIT PROGRAMME D'ORDINATEUR CORRESPONDANTS**
VERFAHREN ZUR VERWALTUNG VON VERBINDUNGEN IN EINEM OPTISCHEN ZUGANGSNETZWERK SOWIE PLATTFORM, VERMITTLUNGSSTELLE, NETZWERK UND COMPUTERPROGRAMMPRODUKT DAFÜR
METHOD FOR MANAGING CONNECTIONS IN AN OPTICAL ACCESS NETWORK, AND RELATED PLATFORM, EXCHANGE, NETWORK AND COMPUTER PROGRAM PRODUCT

(30) Priorité: 04.10.2006 FR 0608704
(43) Date de publication de la demande: 17.06.2009
(73) Titulaire: Orange, 75015 Paris (FR)
(72) Inventeur: GUIGNARD, Philippe, F-22560 Pleumeur Bodou (FR); GLATTY, Roman, F-91460 Marcoussis (FR); BOURGART, Fabrice, F-22700 Perros Guirec (FR)
(74) Mandataire: Vidon Brevets & Stratégie
(86) Numéro de dépôt international: PCT/FR2007/052024
(87) Numéro de publication internationale: WO 2008/040900

(56) Documents cités:
- WO-A-03/005156
- US-A1- 2003 012 485
- US-A1- 2005 129 400

## Description

Procédé de gestion du raccordement dans un réseau d'accès optique, plateforme, central, réseau et produit programme d'ordinateur correspondants.

### 1. Domaine de l'invention

Le domaine de l'invention est celui des réseaux de télécommunications optiques.

L'invention trouve notamment son application dans les réseaux d'accès optique, par exemple dans les réseaux d'accès passifs ou PON (pour « Passive Optical Network » en anglais).

### 2. Solutions de l'art antérieur

L'architecture PON est retenue aujourd'hui par certains opérateurs des télécommunications pour les importants déploiements optiques à venir concernant la clientèle résidentielle. Compte tenu du volume d'équipements et de l'infrastructure à installer, la recherche du coût d'investissement minimum prend ici une importance particulière.

Le choix de l'architecture PON permet de réduire les coûts d'investissement puisqu'elle permet de mutualiser une partie des équipements et de l'infrastructure.

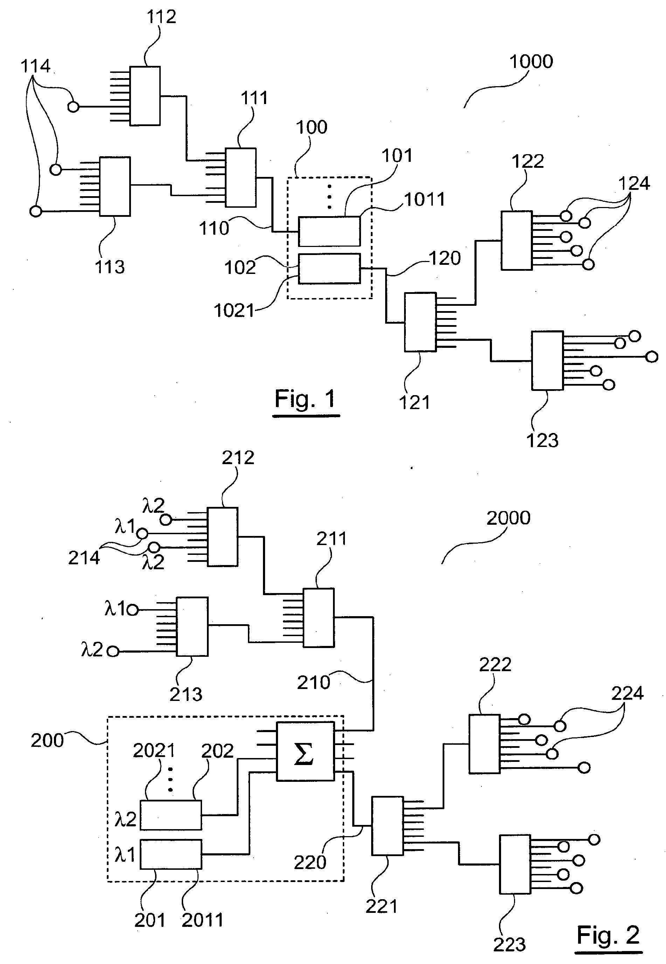

On présente, en relation avec la *figure 1*, un schéma simplifié d'un réseau optique passif PON 1000 classique. Le réseau PON 1000 comprend un central (ou «Central Office ») 100 comprenant lui-même plusieurs châssis 101, 102 qui constituent des terminaisons de lignes optiques ou OLT (pour « Optical Line Termination »).

Dans chaque châssis 101, 102 peut être insérée une ou plusieurs carte(s) PON (non représentée(s)) comportant une ou plusieurs interfaces physiques, chacune constituant le départ d'une arborescence optique. On désigne ci-après ces interfaces physiques par module de transmission. Dans le cadre de cette figure 1, on s'est placé dans un cas particulier selon lequel les châssis 101, 102 comprennent chacun un unique module de transmission 1011 et 1021 constituant le départ d'une arborescence optique 110, 120.

Chacune des arborescences 110, 120 présente des caractéristiques imposées par les différentes normes ITU (pour International Telecommunication Union) issues du groupe FSAN (pour « Full Service Access Network »), telles que par exemple les recommandations G.983, G.984 ou les standard IEEE 802.3ah.

Dans ces normes sont notamment spécifiés le taux de partage physique maximum de l'infrastructure optique et les contraintes sur la longueur des liens entre le central 100 et les modules utilisateurs, ces deux grandeurs étant dépendantes car devant s'inscrire dans une gamme de budget optique.

L'arborescence 110 comprend, à titre d'exemple, deux niveaux de couplage à base de trois coupleurs 1 x N (où N est un entier positif, par exemple égal à 8) 111, 112, 113 auxquels sont reliés des terminaisons réseau optiques 114 ou ONTs (pour « Optical Network Terminations ») ci-après désignés par modules utilisateurs.

L'arborescence 120 comprend deux niveaux de couplage à base de trois coupleurs 1 x N 121, 122, 123 auxquels sont reliées des terminaisons réseau optiques 124.

Une plateforme de gestion (non représentée), hébergée sur une station (par exemple un PC, un serveur, ...) est connectée aux différentes cartes PON des modules de transmission 1011, 1021 du central 100, afin de configurer les échanges entre les modules de transmission 1011, 1021 et les modules utilisateurs ONT 114, 124 et de centraliser les différentes informations de gestion du réseau PON 1000.

Une flexibilité dans le domaine temporel est définie dans le cadre des normes ITU issues du groupe FSAN : il s'agit de l'allocation de bande passante dynamique ou DBA (pour « Dynamic Bandwidth Allocation »), qui vise à offrir de façon dynamique dans le sens admission par le réseau (ou sens remontant), un surcroît de capacité aux modules utilisateurs 114, 124 qui en font la requête en réutilisant des ressources non employées ponctuellement par d'autres modules utilisateurs 114, 124.

Un schéma de déploiement classique d'un réseau PON correspond à une arborescence comprenant deux niveaux de couplage, chacun à base de coupleurs 1 x 8, montés en cascade.

Dans le cas d'une faible densité de modules utilisateurs, le premier coupleur peut se situer au niveau du central pour favoriser un remplissage rapide de l'interface optique au détriment de l'efficacité du partage de chaque fibre qui n'est plus partagée qu'entre huit modules utilisateurs.

La tendance est néanmoins à une densification suffisante des modules utilisateurs ce qui implique que le premier coupleur est situé à distance du central, par exemple, à l'extrémité d'un premier tronçon de fibre (appelé « feeder »). Dans ce cas, l'essentiel du parcours de la fibre est partagé, ce qui permet d'obtenir une optimisation économique importante.

Ainsi, dans le cas d'une grande densité de modules utilisateur, la réalisation de conduites (travaux publics) empruntées par la fibre nécessite un "pavage" de l'ensemble de la zone à raccorder, avec en conséquence une découpe en plaques de cette zone à raccorder.

Les trois paramètres principaux influençant directement le nombre de modules de transmission associé à une carte PON à déployer dans le central sont :
- la répartition des clients (ou modules utilisateurs) en fonction de la configuration des trajets que peuvent emprunter les câbles ;
- le débit utile total par interface optique au central ;
- le taux de partage physique par interface optique au central.

L'effet des deux derniers paramètres est évident :
- dès que le débit agrégé (ou somme des débits) vers ou en provenance de tous les modules utilisateurs devient supérieur au débit maximum que peut émettre ou recevoir les modules de transmission raccordés au central, il faut implémenter un nouveau module de transmission, même si le taux de partage maximum permis au niveau budget optique n'est pas atteint ;
- dès que le nombre de modules utilisateurs raccordés atteint le taux de partage physique maximum du module de transmission, il faut également implémenter un nouveau module de transmission, même si le débit agrégé vers ou en provenance des module utilisateurs est inférieur au débit maximum que peut émettre ou recevoir le module de transmission.

Le paramètre lié à la répartition des clients en fonction de la configuration des trajets que peuvent emprunter les câbles influence directement le nombre de modules de transmission à déployer dans le central de par la configuration des conduites et la découpe en plaques qui en résulte.

En effet, si des clients associés à des modules utilisateurs, demandent un raccordement, et s'ils sont situés dans une direction ne correspondant à aucun départ de carte PON déjà installée, il est nécessaire d'installer un nouveau module de transmission associé à un départ de carte PON du central afin de les desservir.

Classiquement, on cherche à optimiser, a priori, l'utilisation des capacités des modules de transmission (que ce soit en termes de taux de partage, de débit agrégé ou de la répartition des clients en fonction de la configuration des trajets que peuvent emprunter les câbles) au moment de l'installation physique du réseau et éventuellement au moment de l'installation de nouveaux modules de transmission dans le réseau.

Cependant, du fait que cette optimisation se fait a priori, au moment de l'installation du réseau, et que les besoins des utilisateurs (que ce soit en termes de taux de partage, de débit agrégé ou de répartition des clients, ou modules utilisateurs) en fonction de la configuration des trajets que peuvent emprunter les câbles, évoluent constamment et notamment après l'installation du réseau, cette optimisation s'avère complexe et peu efficace.

On observe ainsi, dans certains cas, une sous-utilisation des capacités des modules de transmission des réseaux PON.

Le document de brevet US 2003/0012485 décrit un commutateur optique actif permettant de gérer le routage de signaux de trafic dans un réseau optique. Ce commutateur est placé entre un central et une pluralité de modules utilisateurs. Cependant, la mise en oeuvre (c'est-à-dire l'introduction) d'un tel commutateur dans le réseau optique ne permet pas d'optimiser l'utilisation des capacités des modules de transmission du central.

Il existe donc un besoin d'une technique qui permette de pallier ces inconvénients de l'art antérieur.

Plus précisément, une telle technique devrait permettre d'optimiser l'utilisation des capacités (notamment en termes de taux de partage ou de débit agrégé) des modules de transmission du central d'un réseau d'accès optique.

Une telle technique devrait également pouvoir réduire la quantité d'équipements à déployer dans un tel réseau et donc diminuer les coûts et l'encombrement du réseau.

Une telle technique devrait également permettre de procurer plus de flexibilité dans l'utilisation du réseau d'accès.

### 4. Exposé de l'invention

L'invention permet de répondre à ce besoin, en proposant un procédé de gestion du raccordement d'une pluralité de modules utilisateurs à une pluralité de modules de transmission d'un central dans un réseau d'accès optique.

Selon l'invention ce procédé comprend une étape de réarrangement dynamique du raccordement d'au moins un desdits modules utilisateurs à au moins un desdits modules de transmission, telle que définie dans la revendication 1.

Le principe général de l'invention consiste ainsi en une gestion dynamique des raccordements des modules utilisateurs aux modules de transmission du central mise en oeuvre notamment a posteriori, après l'installation physique du réseau, en fonction d'au moins un critère(s), par exemple défini(s) par un opérateur.

Bien entendu cette gestion dynamique des raccordements des modules utilisateurs aux modules de transmission du central peut être mise en oeuvre ab initio, au moment de l'installation physique du réseau.

Ainsi, l'étape de réarrangement dynamique permet d'optimiser l'utilisation des capacités des modules de transmission du central. En effet, elle permet d'augmenter le nombre de modules d'utilisateurs raccordés au central et/ou le débit agrégé du central pour un nombre donné de modules de transmission, et d'offrir un niveau de service supérieur pour un même nombre d'équipements au central.

Elle permet également de réduire la quantité d'équipement et notamment de modules de transmission à déployer dans le central et donc de réduire les coûts et encombrement du réseau.

Ainsi, ce procédé de gestion permet de procurer une grande flexibilité dans l'utilisation du réseau d'accès. Il peut être utilisé en complément du mécanisme d'allocation de bande passante dynamique (ou DBA) précité dans le but d'apporter de la flexibilité dans le domaine temporel au réseau d'accès.

Selon un mode de réalisation, la flexibilité apportée par l'invention est "lente" : elle correspond à une échelle temporelle de plusieurs jours (ou plus), dans le cas de l'optimisation d'un déploiement, ou de quelques minutes à quelques heures, dans le cas d'une optimisation de trafic entre clients actifs/inactifs. Pour ce dernier cas, on peut imaginer différents scénarios intéressant un opérateur : reconfigurer par exemple les raccordements en tenant compte de profils de trafic différents pour le jour ou la nuit, ou profiter de l'inactivité de clients (absences courtes ou longues) pour réattribuer les ressources rendues momentanément disponibles.

On peut noter que dans le cas de l'allocation de ressources pendant des durées beaucoup plus faibles (de l'ordre de la seconde ou moins encore), le mécanisme DBA constitue une solution satisfaisante.

Par exemple, le ou les critères d'optimisation est(sont) défini(s) par l'opérateur et peut(vent) être :
- le remplissage maximal (en terme de raccordement de modules utilisateurs) des module de transmission, en profitant de la granularité des débits proposés aux différents modules utilisateurs (à l'image de la défragmentation d'un disque dur de PC) ;
- la répartition équilibrée des modules utilisateurs sur les modules de transmission en termes de débit agrégé, en mixant les différents profils de débit sur chaque module de transmission. On peut alors laisser une marge de débit disponible sur chaque module de transmission pour satisfaire des demandes ponctuelles de débit plus élevé ;
- le regroupement des débits du même ordre de grandeur sur les différents modules de transmission ;
- le regroupement des modules utilisateurs présentant des demandes en QoS (pour « Quality of Service ») du même ordre de grandeur sur les différents modules de transmission ;
- le meilleur compromis taux de partage / remplissage en débit du module de transmission.

En outre, la présente invention, grâce à l'étape de réarrangement des raccordements, en permettant d'optimiser l'utilisation des capacités des modules de transmission en fonctionnement dans le réseau PON, permet de réduire (voire d'annuler) le nombre de modules de transmission redondants à prévoir dans un réseau PON par rapport au cas classique où l'on peut prévoir jusqu'à un module de transmission redondant pour chaque module de transmission en fonctionnement.

Selon une caractéristique de l'invention, l'étape de réarrangement dynamique est déclenchée par une détection de l'un au moins des événements appartenant au groupe comprenant :
- introduction, dans ledit réseau d'accès, d'un nouveau module utilisateur ;
- introduction, dans ledit réseau d'accès, d'un nouveau module de transmission ;
- demande de modification d'un débit associé à au moins un module utilisateur ;
- détection d'au moins un engorgement (par exemple momentané) en débit (en réception ou en émission) d'un module de transmission ;
- occurrence d'un événement périodique (par exemple un créneau horaire).

Selon un mode de réalisation de l'invention, chaque module de transmission est adapté pour émettre des signaux à une longueur d'onde d'émission prédéterminée et caractéristique du module de transmission et pour recevoir des signaux à une longueur d'onde de réception prédéterminée et caractéristique du module de transmission,
chaque module utilisateur est adapté pour émettre des signaux à une longueur d'onde d'émission accordable et pour s'accorder sur une longueur d'onde de réception particulière,
et un module utilisateur est raccordé à un module de transmission lorsque la longueur d'onde d'émission du module utilisateur est accordée de sorte à être identique à la longueur d'onde de réception du module de transmission et le module utilisateur est accordé sur la longueur d'onde d'émission du module de transmission.

Ainsi, le réarrangement des raccordements est obtenu, par exemple, au moyen de l'introduction de l'accordabilité des longueurs d'onde d'émission et de réception.

Selon un mode de réalisation de l'invention, l'étape de réarrangement comprend :
- une étape d'obtention d'une topologie représentative du raccordement de chacun des modules utilisateurs aux modules de transmission ;
- une étape de basculement du raccordement d'au moins un module utilisateur basculé, d'un module de transmission source à un module de transmission destinataire en fonction dudit au moins un critère d'optimisation prédéterminé.

Selon une caractéristique de l'invention, l'étape de basculement comprend les étapes suivantes :
- envoi au module de transmission source d'un ordre de basculement, qui est ensuite transmis au module utilisateur basculé ;
- accord de la longueur d'onde d'émission du module utilisateur basculé à la longueurs d'onde de réception du module de transmission destinataire ; et
- accord de la longueur d'onde de réception du module utilisateur basculé à la longueur d'onde d'émission du module de transmission destinataire.

Selon une caractéristique de l'invention, à chaque raccordement d'un nouveau module utilisateur au central, le nouveau module utilisateur est initialement raccordé à un module de transmission par défaut.

Ainsi, on réserve une part du débit du module de transmission par défaut pour qu'il n'y ait pas de blocage à l'arrivée de nouveaux modules utilisateurs. Selon une variante, on réserve le module de transmission par défaut aux actions de gestion tel que le raccordement d'un nouveau module utilisateur.

Selon un mode de réalisation de l'invention, en cas de dysfonctionnement d'un premier module de transmission, le procédé de gestion comprend les étapes suivantes :
- sélection, d'au moins un module utilisateur, dit(s) module(s) utilisateur(s) prioritaire(s), raccordé au premier module de transmission, en fonction d'au moins un critère prédéterminé ;
- raccordement du ou des au moins un module(s) utilisateur(s) prioritaire(s) à au moins un second module de transmission.

Ainsi, on peut garantir un niveau de fiabilité et de qualité de service supérieur pour un ou plusieurs module(s) utilisateur(s) associé à des clients prioritaire(s), même en cas de panne du ou des module(s) de transmission au(x)quel(s) il(s) est(sont) raccordé(s).

L'invention concerne également un produit programme d'ordinateur téléchargeable depuis un réseau de communication et/ou enregistré sur un support lisible par ordinateur et/ou exécutable par un processeur, caractérisé en ce qu'il comprend des instructions de code de programme pour la mise en oeuvre du procédé de gestion tel que précédemment décrit.

L'invention concerne également une plateforme de gestion du raccordement d'une pluralité de modules utilisateurs à une pluralité de modules de transmission d'un central dans un réseau d'accès optique, telle que définie dans la revendication 7.

L'invention concerne également un central d'un réseau d'accès optique comprenant une plateforme de gestion selon la revendication 7.

Les avantages des produit programme d'ordinateur, plateforme de gestion et central sont sensiblement les mêmes que ceux du procédé de gestion tel que précédemment décrit, ils ne sont pas détaillées plus amplément.

L'invention concerne également un réseau d'accès optique comprenant une plateforme de gestion selon la revendication 7.

Les avantages du réseau d'accès optique sont sensiblement les mêmes que ceux du procédé de gestion tel que précédemment décrit, ils ne sont pas détaillées plus amplement.

Selon un mode de réalisation de l'invention, chaque module de transmission est adapté pour émettre des signaux à une longueur d'onde d'émission prédéterminée et caractéristique du module de transmission et pour recevoir des signaux à une longueur d'onde de réception prédéterminée et caractéristique du module de transmission,
en chaque module utilisateur est adapté pour émettre des signaux à une longueur d'onde d'émission accordable et pour s'accorder sur une longueur d'onde de réception particulière,
et un module utilisateur est raccordé à un module de transmission lorsque la longueur d'onde d'émission du module utilisateur est accordée de sorte à être identique à la longueur d'onde de réception du module de transmission et le module utilisateur est accordé sur la longueur d'onde d'émission du module de transmission.

Selon un premier mode de mise en oeuvre de l'invention, les modules de transmission sont connectés aux modules utilisateurs grâce à une arborescence comprenant au moins un coupleur optique MxN où M et N sont des entiers naturels positifs.

Ainsi, chacun des modules utilisateurs reçoit l'ensemble des signaux émis par l'ensemble des modules de transmission. On obtient ainsi une grande souplesse au niveau des réarrangements du raccordement des modules utilisateur.

Selon un second mode de mise en oeuvre de l'invention, les modules de transmission sont connectés aux modules utilisateurs grâce à une arborescence comprenant au moins un démultiplexeur optique à réponse cyclique.

Ainsi, chacun des modules utilisateurs reçoit seulement une partie des signaux émis par l'ensemble des modules de transmission. De ce fait, les moyens de filtrage en longueur d'onde des modules utilisateur n'ont pas besoin d'être très sélectifs.

Bien entendu, on peut également selon une variante de ce second mode de réalisation, mettre en oeuvre au moins un démultiplexeur optique à réponse non cyclique.

### 5. Liste des figures

D'autres caractéristiques et avantages de l'invention apparaîtront plus clairement à la lecture de la description suivante de plusieurs modes de réalisation, donnés à titre de simples exemples illustratifs et non limitatifs, et des dessins annexés, parmi lesquels :
- la figure 1, déjà commentées en relation avec l'art antérieur, présente un schéma simplifié d'un réseau d'accès optique passif classique ;
- la figure 2 est un schéma simplifié d'un réseau d'accès optique passif selon un mode de réalisation de l'invention ;
- la figure 3 est un schéma d'une plateforme de gestion mettant en oeuvre un procédé de gestion du raccordement des modules utilisateurs aux modules de transmission du réseau de la figure 2, selon le mode de réalisation précité de l'invention ;
- la figure 4 présente les étapes principales du réarrangement dynamique (mis en oeuvre par un algorithme de réarrangement dynamique) du procédé de gestion mis en oeuvre par la plateforme de gestion de la figure 3 ;
- la figure 5 présente un exemple d'implémentation d'un réseau d'accès optique passif selon un mode de mise en oeuvre de l'invention.

### 6. Description d'un mode de réalisation de l'invention

On se place dans la suite, dans le cadre d'un réseau d'accès optique passif 2000 selon un mode de réalisation de l'invention.

Un schéma simplifié du réseau d'accès optique passif 2000 est présenté par la *figure 2*.

Le réseau 2000 comprend un central (ou « Central Office ») 200 comprenant lui-même une pluralité de châssis 2011, 2021. Sur cette figure 2, seuls deux châssis ont été représentés mais, bien entendu, le réseau PON peut comprendre un nombre quelconque de châssis.

Dans chaque châssis 2011, 2021 peut être insérée une ou plusieurs carte(s) PON (non représentée(s)) comportant une ou plusieurs interfaces physiques, chacune constituant le départ d'une arborescence optique. On désigne ci-après ces interfaces physiques par module de transmission. Dans le cadre de cette figure 2, on s'est placé dans un cas particulier selon lequel les châssis 2011, 2021 comprennent chacun un unique module de transmission 2011 et 2021 constituant le départ d'une arborescence optique 210, 220.

Dans ce mode de réalisation, l'arborescence 210 comprend deux niveaux de couplage à base de trois coupleurs 1 x N (où N est un entier naturel positif, par exemple égal à 8) 211, 212, 213 auxquels sont reliés des modules utilisateur 214.

Dans ce mode de réalisation, l'arborescence 220 comprend deux niveaux de couplage à base de trois coupleurs 1 x N 221, 222, 223 auxquels sont reliés des modules utilisateur 224.

Bien entendu ces arborescences 210, 220 peuvent comprendre un nombre quelconque de coupleur d'un type quelconque par exemple du type M x N (où N et M sont des entiers naturels positifs).

Ainsi, dans le réseau PON 2000, un ensemble de modules de transmission (par exemple 5 tels modules) dessert "conjointement" une plaque élargie de modules utilisateurs (par exemple 15 tels modules).

Dans le cadre de la mise en oeuvre de l'invention, chacun des modules de transmission 2011, 2021 est adapté pour émettre des signaux d'émission à une longueur d'onde d'émission fixe et pour recevoir des signaux de réception à une longueur d'onde de réception fixe. Les longueurs d'onde de réception des modules de transmission sont toutes distinctes les unes des autres et les longueurs d'onde d'émission des modules de transmission sont toutes distinctes les unes des autres.

Ainsi, chaque module de transmission est associé à un couple de longueurs d'onde comprenant une longueur d'onde d'émission et une longueur d'onde de réception, le couple de longueurs d'onde étant prédéterminé et étant caractéristique du module de transmission.

Par ailleurs, chacun des modules utilisateur 214, 224 est adapté pour émettre des signaux d'émission à une longueur d'onde d'émission qui est accordable et pour s'accorder sur une longueur d'onde de réception particulière.

Ainsi, chaque module utilisateur est associé à un couple de longueurs d'onde comprenant une longueur d'onde d'émission et une longueur d'onde de réception, les fonctions d'émission et de sélection en réception des longueurs d'onde du couple étant accordables.

Un module utilisateur est raccordé à un module de transmission lorsque la longueur d'onde d'émission du module utilisateur est accordée de sorte à être identique à la longueur d'onde de réception du module de transmission et le module utilisateur est accordé sur la longueur d'onde d'émission du module de transmission.

Du fait que les longueurs d'onde d'émission des modules utilisateur sont accordables et du fait que les modules utilisateurs sont accordables en réception, chaque module utilisateur peut recevoir et émettre des signaux de et vers l'un quelconque des modules de transmission sur le réseau 2000 à condition d'accorder au préalable sa longueur d'onde d'émission de sorte à ce qu'elle soit égale à la longueur d'onde de réception du module de transmission concerné et d'accorder au préalable sa réception de sorte qu'il puisse recevoir la longueur d'onde d'émission du module de transmission concerné.

Conformément à l'invention, plusieurs modes de réalisation des modules utilisateur et des modules de transmission sont possibles, chacun correspondant à l'introduction de fonctions optiques particulières dans le réseau 2000.

Concernant les modules de transmission 2011, 2021, un premier mode de réalisation de l'invention consiste à mettre en oeuvre une source lumineuse (par exemple de type Laser) émettant à une longueur d'onde (d'émission) fixe en émission, et un filtre optique à une longueur d'onde (de réception) fixe placé devant un photodétecteur en réception.

On peut noter que le filtre fixe n'est pas obligatoire (par exemple dans le cas où une sélection en longueur d'onde est réalisée par un démultiplexeur placé entre le module de transmission et le module utilisateur).

Afin de rendre générique ces modules de transmission 2011, 2021, et ne pas à avoir à gérer un parc de modules de transmission, chacun fabriqué à un couple de longueurs d'onde différent, un second mode de réalisation de l'invention consiste à remplacer la source lumineuse émettant à une longueur d'onde fixe et le filtre à longueur d'onde fixe par des composants accordables, qui seraient accordés une fois pour toutes lors de l'implantation du module de transmission dans le central 200.

Dans le cas de ce second mode de réalisation, l'accordabilité de la source lumineuse ou du filtre peuvent être obtenus de la même manière que celle (ci-après détaillé) de la source lumineuse ou du filtre des modules utilisateur.

L'ensemble des différentes longueurs d'onde émises par les modules de transmission 2011, 2021 sont ensuite couplées dans un ensemble de fibres (chacune associée à l'une des arborescences 210, 220 précitées, constituant autant de départs du central 200), à l'aide d'un organe référencé Σ sur la figure 2. Cet organe peut être un coupleur passif NxN ou plus généralement MxN, ou l'association d'un multiplexeur optique Mx1 avec un coupleur 1xN ou même toute autre association quelconque notamment de coupleurs et/ou de multiplexeurs.

Concernant les modules utilisateur 214, 224, pour la réception, conformément à l'invention, on peut mettre en oeuvre un filtre optique dont la longueur d'onde (de réception) est accordable, placé devant un photodétecteur en réception, pour l'émission, on peut, conformément à l'invention mettre en oeuvre :
- une source lumineuse (par exemple de type Laser) accordable continûment ;
- une source lumineuse (par exemple de type Laser) accordable par sauts (de manière non continue) ;
- une barrette de sources lumineuses (par exemple de type Laser) dans laquelle on allume la source lumineuse correspondant à la longueur d'onde que l'on souhaite émettre.

Par ailleurs, dans le cas où la longueur d'onde de réception (dans les sens descendant) et la longueur d'émission (dans le sens remontant) d'un module utilisateur sont identiques, conformément à l'invention, on peut mettre en oeuvre une technique de réutilisation de la même longueur d'onde, avec un émetteur "colorless" (c'est-à-dire qui efface la modulation du signal à la longueur d'onde de réception provenant d'un module de transmission, qui remodule et renvoie le même signal à cette même longueur d'onde vers le module de transmission). Cette solution est moins avantageuse au niveau du budget optique, mais elle évite l'utilisation d'une source accordable chez le client.

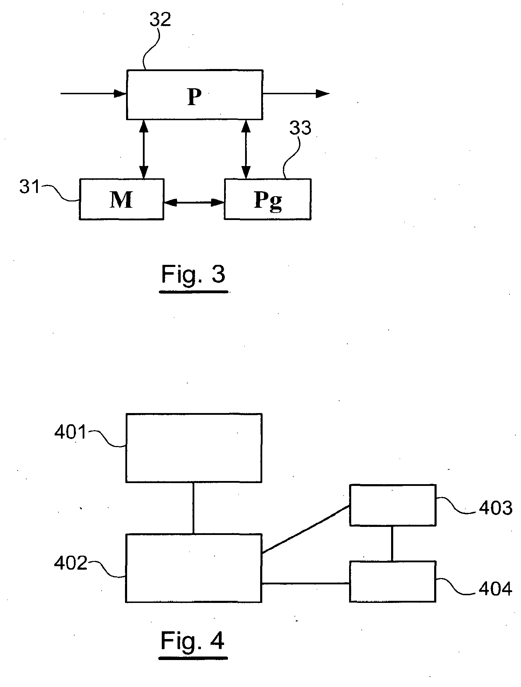

Une plateforme de gestion du raccordement des modules utilisateurs 214, 224 (illustrée par la *figure 3*) aux modules de transmission 2011, 2021 selon le mode de réalisation précité de l'invention est hébergée sur une station (par exemple un PC, un serveur, ...) et est connectée aux différentes cartes PON des modules de transmission 2011, 2021 du central 200.

Comme illustré en figure 3, cette plateforme de gestion comprend une mémoire 31, une unité de traitement 32, équipée par exemple d'un microprocesseur µP, et pilotée par le programme d'ordinateur 33, mettant en oeuvre un procédé de gestion selon le mode de réalisation précité de l'invention.

Ainsi, le programme 33 comprend notamment un algorithme de réarrangement, dynamique (ci-après décrit en relation avec la figure 4) mettant en oeuvre l'étape de réarrangement dynamique du raccordement des modules utilisateurs aux modules de transmission en fonction d'au moins un critère d'optimisation prédéterminé tel que détaillé ci-après.

A l'initialisation, les instructions de code du programme d'ordinateur 33 sont par exemple chargées dans une mémoire RAM avant d'être exécutées par le processeur de l'unité de traitement 32.

Ainsi, le microprocesseur de l'unité de traitement 32 met en oeuvre les étapes du procédé de gestion selon l'invention, de façon à prendre en charge le raccordement des modules utilisateurs 214, 224 aux modules de transmission 2011, 2021.

Pour cela, la plateforme de gestion comprend des moyens de réarrangement dynamique du raccordement des modules utilisateurs aux modules de transmission en fonction d'au moins un critère d'optimisation prédéterminé tel que détaillé ci-après. Ces moyens sont pilotés par le microprocesseur de l'unité de traitement 32.

Dans un mode de mise en oeuvre particulier de l'invention, la plateforme de gestion est comprise dans le central 200.

Ainsi, cette plateforme de gestion (non représentée sur la figure 2) permet de configurer les échanges entre les modules de transmission 2011, 2021 et les modules 214, 224, et de centraliser les différentes informations de gestion du réseau PON 2000.

Lors de l'installation du réseau PON 2000, on installe un premier module de transmission associé à un premier couple de longueurs d'onde comprenant une première longueur d'onde d'émission pour le sens descendant (du module de transmission vers les modules utilisateurs) et une première longueur d'onde de réception pour le sens remontant (des modules utilisateurs vers le module de transmission). Ce premier couple de longueur d'onde est fixe et est caractéristique du premier module de transmission.

Ensuite, on raccorde des modules utilisateurs à ce premier module de transmission, tant que celui-ci n'est pas proche de sa capacité maximum.

On rappelle qu'un module utilisateur est raccordé à ce premier module de transmission à partir du moment où la longueur d'onde d'émission et la longueur d'onde de réception du module utilisateur sont accordées de sorte à être égales respectivement à la longueur d'onde de réception et à la longueur d'onde d'émission du premier module de transmission.

Quand la demande liée au raccordement d'un nouveau module utilisateur entraîne le dépassement de la capacité du premier module de transmission, un second module de transmission est activé. Il est associé à un second couple de longueur d'onde comprenant une seconde longueur d'onde d'émission pour le sens descendant et une seconde longueur d'onde de réception pour le sens remontant. Les longueurs d'onde d'émission et de réception (fixe et caractéristique du second module de transmission) de ce second couple de longueurs d'onde sont distinctes respectivement des longueurs d'onde d'émission et de réception du premier couple de longueur d'onde.

Les nouveaux modules utilisateurs sont alors raccordés sur ce second module de transmission.

Le processus est ensuite renouvelé jusqu'à ce que chaque module utilisateur soit raccordé à un module de transmission.

Par exemple, cette phase d'installation du réseau PON 2000 fait partie du procédé de gestion selon l'invention.

Après l'installation du réseau PON 2000, la plateforme de gestion met en oeuvre un algorithme de réarrangement dynamique du raccordement d'au moins un des modules utilisateurs à au moins un des modules de transmission en fonction d'au moins un critère d'optimisation prédéterminé.

Par exemple, ce réarrangement dynamique peut être déclenché par la détection de l'un au moins des événements appartenant au groupe comprenant :
- introduction, dans le réseau d'accès, d'un nouveau module utilisateur ;
- introduction, dans le réseau d'accès, d'un nouveau module de transmission ;
- demande de modification d'un débit associé à au moins un module utilisateur ;
- détection d'engorgement en débit d'un module de transmission ;
- occurrence d'un événement périodique (par exemple une plage horaire)...

On suppose dans la suite que ce réarrangement est réalisé à intervalles de temps réguliers.

Ce réarrangement dynamique du raccordement des modules utilisateurs aux modules de transmission mis en oeuvre régulièrement permet notamment d'effectuer un remplissage optimal de chaque module de transmission en termes de nombre de clients raccordés ou de débit agrégé.

Selon l'invention, on peut privilégier différents critères d'optimisation prédéterminés, correspondant à des modes de réarrangement différents.

Par exemple, le ou les critères d'optimisations est(sont) défini(s) par l'opérateur et peut(vent) être :
- le remplissage maximal (en terme de raccordement de modules utilisateurs) des module de transmission, en profitant de la granularité des débits proposés aux différents modules utilisateurs (à l'image de la défragmentation d'un disque dur de PC) ;
- la répartition équilibrée des modules utilisateurs sur les modules de transmission en termes de débit agrégé, en mixant les différents profils de débit sur chaque module de transmission. On peut alors laisser une marge de débit disponible sur chaque module de transmission pour satisfaire des demandes ponctuelles de débit plus élevé ;
- le regroupement des débits du même ordre de grandeur sur les différents modules de transmission ;
- le regroupement des modules utilisateurs présentant des demandes en QoS (pour « Quality of Service ») du même ordre de grandeur sur les différents modules de transmission ;
- le meilleur compromis taux de partage / remplissage en débit du module de transmission.

On présente, en relation avec la *fïgure 4*, les étapes principales du réarrangement dynamique (mis en oeuvre par l'algorithme de réarrangement dynamique précité) du procédé de gestion mis en oeuvre par la plateforme de gestion selon le mode de réalisation précité de l'invention.

Tout d'abord, la plateforme de gestion met en oeuvre une étape 401 d'obtention d'une topologie représentative du raccordement de chacun des modules utilisateurs aux modules de transmission. Il a ainsi accès aux profils des raccordements des modules utilisateurs sur les modules de transmission (un profil intègre par exemple les demandes de débits descendant et remontant, la QoS prévue dans le contrat client,...). Ces profils servent de variables d'entrées pour l'algorithme de réarrangement.

Puis la plateforme de gestion met en oeuvre une étape 402 de basculement du raccordement d'un module utilisateur, d'un module de transmission source à un module de transmission destinataire.

L'étape 402 de basculement comprend les sous-étapes suivantes :
- génération et envoi 403 au module de transmission source d'un ordre de basculement, qui est ensuite transmis au module utilisateur basculé ;
- accord 404 des longueurs d'onde d'émission et de réception du module utilisateur basculé aux longueurs d'onde de réception et d'émission du module de transmission destinataire.

Ensuite, le module de transmission destinataire reconnaît le module utilisateur basculé grâce à un mécanisme de reconnaissance.

Ainsi, le réarrangement dynamique selon l'invention s'intègre bien dans les évolutions du PON, et est compatible avec le fonctionnement des systèmes actuels. En effet, l'étape de basculement utilise directement les mécanismes de reconnaissance d'un module utilisateur donné par un module de transmission donné auquel il est raccordé.

En effet, selon ce mécanisme de reconnaissance d'un module utilisateur donné par un module de transmission donné, lorsque le module utilisateur donné est raccordé au module de transmission donné, le module utilisateur donné se met en écoute des messages en provenance du module de transmission donné.

En parallèle, le module de transmission donné émet périodiquement, en direction des modules utilisateurs qui lui sont raccordés et donc notamment en direction du module utilisateur donné, des requêtes pour vérifier si de nouveaux modules utilisateurs (notamment le module utilisateur donné) se sont raccordés au module de transmission donné.

Tout nouveau module utilisateur (notamment le module utilisateur donné) recevant cette requête répond immédiatement en envoyant un message de réponse qui contient un identifiant unique (par exemple le numéro de sa carte MAC, pour « Medium Access Control » ; en français, « contrôle d'accès au support ») au module de transmission donné. Puis, ledit identifiant (le numéro de la carte MAC de l'exemple) est collecté par le module de transmission donné, qui peut alors intégrer le nouveau module utilisateur dans son plan de trafic (et ainsi, par exemple, allouer un créneau temporel particulier dans lequel le nouveau module utilisateur pourra émettre ses données).

On peut faire en sorte que, tout nouveau module utilisateur « arrivant » sur le réseau 2000 se présente sur une longueur d'onde par défaut, puis est reconnu par un module de transmission par défaut (dont la longueur d'onde de réception est égale à la longueur d'onde par défaut), puis est ensuite basculé, le cas échéant, vers un autre module de transmission, par exemple, en fonction du profil des débits sur le réseau.

Il s'agit donc de choisir quelle longueur d'onde joue le rôle de longueur d'onde par défaut (sur laquelle se présente initialement un nouveau module utilisateur).

On peut également effectuer un déploiement en mettant en oeuvre à chaque fois le même peigne de longueurs d'onde, et ceci dans le même ordre d'introduction des différentes longueurs d'onde. On est ainsi assuré que la première longueur d'onde est toujours présente dans le réseau, celle-ci pouvant constituer ainsi la longueur d'onde par défaut.

Conformément à l'invention, on peut éventuellement introduire au niveau de la plateforme de gestion une contrainte imposant de réserver une part du débit du module de transmission par défaut (auquel est associée la longueur d'onde par défaut) pour qu'il n'y ait pas de blocage à l'arrivée de nouveaux modules utilisateur. On peut également réserver le module de transmission par défaut aux actions de gestion telles que le raccordement d'un nouveau module utilisateur.

Afin de se préparer à un cas de dysfonctionnement d'un (ou plusieurs) module de transmission, on peut prévoir, selon une première implémentation d'un réseau PON conforme à l'invention, de disposer au sein du réseau, un (ou plusieurs) dispositif(s) de transmission redondant(s) et donc en mode veille (ou non activé(s)) mais qui est (sont) prêt(s) à être mis en fonctionnement pour remplacer d'éventuels modules de transmission défaillants.

Selon une seconde implémentation d'un réseau PON conforme à l'invention, on peut également prévoir de ne pas disposer dans le réseau de modules de transmission redondants.

Selon cette seconde implémentation, dans le cas d'un dysfonctionnement d'un premier module de transmission, le procédé de gestion selon le mode de réalisation précité peut comprendre les étapes suivantes :
- sélection, d'au moins un module utilisateur, dit(s) module(s) utilisateur(s) prioritaire(s), raccordé au premier module de transmission, en fonction par exemple d'un critère de priorité associé aux modules utilisateur ;
- raccordement du ou des au moins un module(s) utilisateur(s) prioritaire(s) à au moins un second module de transmission.

Selon une troisième implémentation d'un réseau PON conforme à l'invention, on peut combiner les première et seconde implémentation précitées.

Ainsi la présente invention, grâce à l'étape de réarrangement des raccordements selon l'invention, en permettant d'optimiser l'utilisation des capacités des modules de transmission en fonctionnement, permet de réduire (voir d'annuler) le nombre de modules de transmission redondants à prévoir dans un réseau PON par rapport au cas classique où l'on peut prévoir jusqu'à un module de transmission redondant pour chaque module de transmission en fonctionnement.

Par ailleurs, même sans avoir prévu de modules de transmission redondants, la seconde implémentation précitée permet d'assurer le service pour des clients prioritaires.

Ainsi, on peut garantir un niveau de sécurité supérieur en termes de disponibilité du réseau, de fiabilité et de qualité de service pour un ou plusieurs module(s) utilisateur(s) prioritaire(s), même en cas de panne du ou des module(s) de transmission au(x)quel(s) il(s) est(sont) raccordé(s).

Ainsi, le procédé de gestion selon l'invention permet d'augmenter le nombre de modules d'utilisateurs raccordés au central et/ou le débit agrégé du central pour un nombre donné de modules de transmission du central 200 du réseau 2000.

Il est évident que plus l'optimisation obtenue grâce au réarrangement dynamique selon l'invention va pouvoir se faire sur une plaque comprenant un nombre élevé de modules utilisateurs, plus elle va être efficace.

Ainsi, l'invention trouve un intérêt accru dans le cas d'un réseau PON présentant un taux de partage physique plus important que ce qui est actuellement mis en oeuvre.

Ainsi, il peut être nécessaire d'ajouter un niveau de couplage supplémentaire dans l'infrastructure (en ajoutant par exemple des coupleurs MxN supplémentaires dans les arborescences du réseau, où M et N sont des entiers naturels positifs). D'autre part, on peut prévoir de mettre en oeuvre dans un réseau d'accès optique passif selon l'invention un ou plusieurs amplificateur(s) optique(s) entre au moins un module de transmission et au moins un module utilisateur, afin de mettre en oeuvre une amplification d'au moins un signal optique transitant entre le ou les module(s) de transmission et le ou les module(s) utilisateur, pour compenser les pertes dues à l'augmentation du taux de partage physique.

Dans le cas de l'architecture du réseau 2000 selon le mode de réalisation précité de l'invention, chacun des modules utilisateur reçoit, avant sélection par son filtre optique du signal à la longueur d'onde qui le concerne, l'ensemble de signaux (possédant chacun sa longueur d'onde) émis par l'ensemble des modules de transmission. Ceci est permis par le fait que l'on utilise une arborescence formée essentiellement à partir de coupleurs optiques, transparents aux longueurs d'onde concernées et interconnectés par de la fibre optique.

Si cette architecture présente une grande souplesse au niveau du réarrangement des modules utilisateur, elle présente deux inconvénients. D'une part, l'introduction d'un coupleur M xN s'accompagne d'une perte d'insertion augmentant avec le nombre N. D'autre part, plus le nombre de longueurs d'onde arrivant sur le filtre du module utilisateur est important pour une plage spectrale donnée, plus l'espacement entre les longueurs d'onde doit être faible, et plus la courbe de filtrage de ce filtre doit être raide pour pouvoir extraire une seule longueur d'onde et ne pas être gêné par les interférences avec les longueurs d'onde voisines.

Selon une variante du mode de réalisation précité de l'architecture du réseau 2000, on utilise une arborescence formée essentiellement à partir d'au moins un démultiplexeur optique à réponse cyclique (de type AWG) éventuellement complétée au moyen de coupleurs optiques MxN, transparents aux longueurs d'onde concernées et interconnectés par de la fibre optique.

Ceci se traduit alors par une diffusion partielle des longueurs d'onde vers les modules utilisateur en aval de ces démultiplexeurs. De ce fait, un module utilisateur ne reçoit plus (avant sélection par son filtre optique du signal à la longueur d'onde qui le concerne) l'ensemble des signaux (possédant chacun sa longueur d'onde) émis par l'ensemble des modules de transmission, mais un sous-ensemble de ces signaux.

Le fonctionnement d'un démultiplexeur à réponse cyclique AWG fait que les longueurs d'onde issues de ses ports de sortie sont espacées d'un intervalle égale au FSR (pour « free spectral range» ou «intervalle spectral libre ») du démultiplexeur.

L'avantage de cette variante est qu'un démultiplexeur cyclique de type AWG présente des pertes quasi-constantes en fonction de nombre de sorties. D'autre part, le filtre au niveau du module utilisateur n'a pas besoin d'être très sélectif (la bande passante peut aller jusqu'à la valeur du FSR du démultiplexeur).

Par contre le signal émis par le module utilisateur (transmission remontante) peut posséder la même longueur d'onde que le signal reçu, ou une longueur d'onde décalée d'un multiple du FSR du démultiplexeur cyclique. La variante mettant en oeuvre au moins un démultiplexeur cyclique laisse plus de marge pour le budget optique, mais limite par contre les possibilités de réarrangement du trafic dans le réseau (limité au sous-ensemble de longueurs d'onde reçues par le module utilisateur).

La solution optimale est alors un compromis entre le taux de partage physique que l'on voudrait le plus grand possible et les contraintes liées au budget optique entre les modules de transmission et les modules utilisateur, au bruit introduit par l'amplification, et au nombre de longueur d'ondes utilisables raisonnablement dans ce contexte. Pour chaque architecture particulière du réseau d'accès optique passif, une étude des paramètres de transmission doit être menée pour déterminer cet optimal.

Dans le cadre de la présente invention, certains éléments de la couche physique d'un réseau PON classique peuvent être modifiés notamment : d'une part, la "colorisation" des modules de transmission et l'accordabilité des modules utilisateurs peuvent être réalisées, d'autre part, la puissance des émetteurs optiques peut être augmentée, ou des éléments d'amplification peuvent être introduits, pour permettre d'augmenter le taux de partage.

Les autres éléments tels que le débit, ou le mécanisme du réseau d'accès optique passif restent inchangés. L'idée est bien d'utiliser les équipements existants aujourd'hui en introduisant le minimum de modifications. L'implantation du procédé de gestion selon l'invention est compatible avec les mécanismes actuels de gestion des modules utilisateur par les modules de transmission.

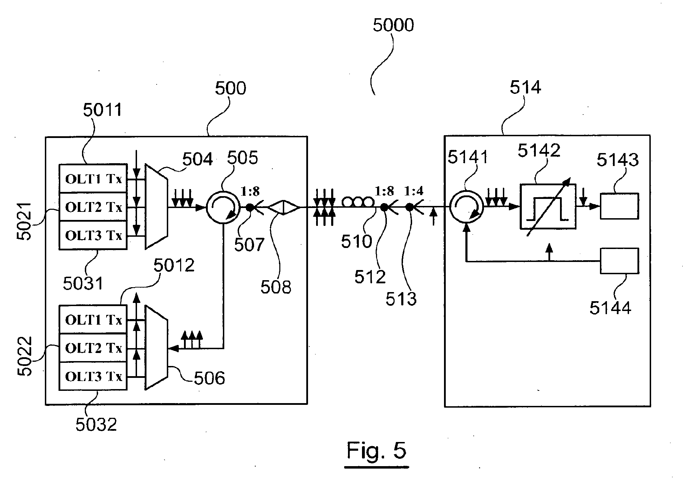

On présente, en relation avec la *figure 5*, un exemple d'implémentation d'un réseau d'accès optique passif 5000 selon un mode de mise en oeuvre de l'invention.

Au niveau du central 500, les émetteurs (sources lumineuses à l'émission des modules de transmission) 5011, 5021, 5031 de modules de transmission sont raccordés aux ports d'entrée d'un multiplexeur optique 504.

Un circulateur 505 permet de séparer les signaux descendants (émis par les modules de transmission) des signaux remontants (reçu par les modules de transmission). Les signaux descendants sont injectés dans l'arborescence 510 du réseau d'accès optique passif.

L'arborescence 510 du réseau d'accès optique passif comprend essentiellement un premier niveau de couplage comprenant notamment un premier coupleur 1x8 507 (situé dans le central 500), un second niveau de couplage comprenant notamment un second coupleur 1x8 512 et un troisième niveau de couplage comprenant notamment un troisième coupleur 1x4 513 interconnectés par de la fibre optique. Ainsi, l'infrastructure arborescente 510 comprend trois niveaux de couplage.

Un étage d'amplification optique (amplificateur optique bidirectionnel) 508 est introduit dans l'arborescence 510 au niveau du central 500 pour compenser l'atténuation introduite par l'augmentation du taux de partage. L'infrastructure passive étant bidirectionnelle, l'amplification 507 est également bidirectionnelle.

Les signaux remontants de l'arborescence du réseau sont aiguillés vers un démultiplexeur optique 506. Le démultiplexeur 506 permet de diriger, vers chaque récepteur 5012, 5022, 5032 de module de transmission, la longueur d'onde qui lui est destinée.

Au niveau d'un module utilisateur 514, un circulateur optique 5141 est chargé d'aiguiller les signaux optiques descendants vers le filtre optique accordable en longueur d'onde 5142 du module utilisateur, et de réinjecter les signaux émis par le laser accordable 5144 du module utilisateur dans l'arborescence 510 dans le sens remontant.

Dans l'exemple proposé, un filtre accordable a été mis en oeuvre en amont d'un détecteur constitué par une photodiode à avalanche 5143, et un laser accordable permet de générer les signaux optiques dans le sens remontant.

Par ailleurs, dans cet exemple d'implémentation, les émetteurs 5011, 5021, 5031 de modules de transmission sont regroupés dans un même premier dispositif et les récepteurs 5011, 5021, 5031 de modules de transmission sont regroupés dans un même second dispositif. Ainsi, selon cette implémentation, chaque module de transmission, comprenant un émetteur et un récepteur, est distribué dans ces premier et second dispositifs. Cependant, bien entendu, dans d'autres exemples d'implémentations de l'invention, chaque module de transmission peut comprendre un émetteur et un récepteur qui sont compris dans un même dispositif constituant le module de transmission.

## Revendications

1. Procédé de gestion du raccordement d'une pluralité de modules utilisateurs (214, 224) à une pluralité de modules de transmission (2011, 2021) d'un central (200) dans un réseau d'accès optique (2000), chaque module de transmission étant associé à un couple de longueurs d'ondes distinctes comprenant une longueur d'onde d'émission et une longueur d'onde de réception,
**caractérisé en ce qu'**il comprend une étape de réarrangement dynamique du raccordement d'au moins un desdits modules utilisateurs, dit module utilisateur basculé, à au moins un desdits modules de transmission en fonction d'au moins un critère d'optimisation prédéterminé, ladite étape de réarrangement comprenant une étape de basculement du raccordement dudit module utilisateur basculé, d'un module de transmission source à un module de transmission destinataire en fonction dudit moins un critère d'optimisation prédéterminé,
et **en ce que** la longueur d'onde d'émission et la longueur d'onde de réception du module utilisateur basculé sont accordés respectivement à la longueur d'onde de réception et à la longueur d'onde d'émission du module de transmission destinataire.

2. Procédé de gestion selon la revendication 1, **caractérisé en ce que** ladite étape de réarrangement est effectuée en cas de détection positive de l'un au moins des événements appartenant au groupe comprenant :
- introduction, dans ledit réseau d'accès, d'un nouveau module utilisateur (214,224);
- introduction, dans ledit réseau d'accès, d'un nouveau module de transmission (2011, 2021) ;
- demande de modification d'un débit associé à au moins un module utilisateur (214, 224) ;
- détection d'au moins un engorgement en débit d'un module de transmission ;
- occurrence d'un événement périodique.

3. Procédé de gestion selon l'une quelconque des revendications 1 et 2, **caractérisé en ce que** l'étape de réarrangement comprend en outre une étape d'obtention d'une topologie représentative du raccordement de chacun des modules utilisateurs (214,224) aux modules de transmission (2011, 2021) et **en ce que** ladite étape de basculement est effectuée en fonction dudit moins un critère d'optimisation prédéterminé et de ladite topologie obtenue.

4. Procédé de gestion selon l'une quelconque des revendications 1 à 3, **caractérisé en ce qu'**à chaque raccordement d'un nouveau module utilisateur au central (200), le nouveau module utilisateur est initialement raccordé à un module de transmission par défaut.

5. Procédé de gestion selon l'une quelconque des revendications 1 à 4, **caractérisé en ce que**, en cas de dysfonctionnement d'un premier module de transmission, il comprend les étapes suivantes :
- sélection, d'au moins un module utilisateur, dit(s) module(s) utilisateur(s) prioritaire(s), raccordé au premier module de transmission, en fonction d'au moins un critère prédéterminé ;
- raccordement du ou des au moins un module(s) utilisateur(s) prioritaire(s) à au moins un second module de transmission.

6. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de gestion selon l'une au moins des revendications 1 à 5.

7. Plateforme de gestion du raccordement d'une pluralité de modules utilisateurs (214, 224) à une pluralité de modules de transmission (2011, 2021) d'un central (200) dans un réseau d'accès optique (2000), chaque module de transmission étant associé à un couple de longueurs d'ondes distinctes comprenant une longueur d'onde d'émission et une longueur d'onde de réception,
**caractérisé en ce qu'**elle comprend :
des moyens de réarrangement dynamique du raccordement d'au moins un desdits modules utilisateurs, dit module utilisateur basculé, à au moins un desdits modules de transmission en fonction d'au moins un critère d'optimisation prédéterminé, lesdits moyens de réarrangement comprenant des moyens de basculement du raccordement dudit module utilisateur basculé, d'un module de transmission source à un module de transmission destinataire en fonction dudit moins un critère d'optimisation prédéterminé,
des moyens pour accorder la longueur d'onde d'émission et la longueur d'onde de réception du module utilisateur basculé respectivement à la longueur d'onde de réception et à la longueur d'onde d'émission du module de transmission destinataire.

8. Central d'un réseau d'accès optique **caractérisé en ce qu'**il comprend une plateforme de gestion selon la revendication 7.

9. Réseau d'accès optique **caractérisé en ce qu'**il comprend une plateforme de gestion selon la revendication 7.

## Patentansprüche

1. Verfahren zur Verwaltung des Anschlusses einer Vielzahl von Benutzermodulen (214, 224) an eine Vielzahl von Übertragungsmodulen (2011, 2021) einer Vermittlungsstelle (200) in einem optischen Zugangsnetzwerk (2000), wobei jedes Übertragungsmodul mit einem Paar von unterschiedlichen Wellenlängen verbunden ist, umfassend eine Sendewellenlänge und eine Empfangswellenlänge
**dadurch gekennzeichnet, dass** es einen Schritt der dynamischen Neuordnung des Anschlusses mindestens eines der Benutzermodule, umgeschwenktes Benutzermodul genannt, an mindestens eines der Übertragungsmodule in Abhängigkeit von mindestens einem vorbestimmten Optimierungskriterium umfasst, wobei der Schritt der Neuordnung einen Schritt des Umschwenkens des Anschlusses des umgeschwenkten Benutzermoduls von einem Quellenübertragungsmodul auf ein Zielsübertragungsmodul in Abhängigkeit von dem mindestens einen vorbestimmten Optimierungskriterium umfasst,
und dass die Sendewellenlänge und die Empfangswellenlänge des umgeschwenkten Benutzermoduls jeweils auf die Empfangswellenlänge und die Sendewellenlänge des Zielsübertragungsmoduls abgestimmt sind.

2. Verwaltungsverfahren nach Anspruch 1, **dadurch gekennzeichnet, dass** der Schritt der Neuordnung im Falle einer positiven Erfassung mindestens eines der Ereignisse erfolgt, die der folgenden Gruppe angehören, umfassend:
- Einführung eines neuen Benutzermoduls (214, 224) in das Zugangsnetzwerk;
- Einführung eines neuen Übertragungsmoduls (2011, 2021) in das Zugangsnetzwerk;
- Anforderung einer Änderung einer Durchgangsmenge in Verbindung mit mindestens einem Benutzermodul (214, 224);
- Erfassung mindestens eines Engpasses in der Durchgangsmenge eines Übertragungsmoduls;
- Vorhandensein eines periodischen Ereignisses.

3. Verwaltungsverfahren nach einem der Ansprüche 1 und 2, **dadurch gekennzeichnet, dass** der Schritt der Neuordnung ferner einen Schritt des Erhalts einer Topologie, die für den Anschluss jedes der Benutzermodule (214, 224) an die Übertragungsmodule (2011, 2021) repräsentativ ist, umfasst, und dass der Schritt des Umschwenkens in Abhängigkeit von dem mindestens einen vorbestimmten Optimierungskriterium und der erhaltenen Topologie erfolgt.

4. Verwaltungsverfahren nach einem der Ansprüche 1 bis 3, **dadurch gekennzeichnet, dass** bei jedem Anschluss eines neuen Benutzermoduls an die Vermittlungsstelle (200) das neue Benutzermodul anfänglich an ein Standardübertragungsmodul angeschlossen wird.

5. Verwaltungsverfahren nach einem der Ansprüche 1 bis 4, **dadurch gekennzeichnet, dass** es im Falle einer Fehlfunktion eines ersten Übertragungsmoduls die folgenden Schritte umfasst:
- Auswahl mindestens eines Benutzermoduls, prioritäre(s) Benutzermodul(e) genannt, das an das erste Übertragungsmodul angeschlossen ist, in Abhängigkeit von mindestens einem vorbestimmten Kriterium;
- Anschluss des oder der mindestens einen prioritären Benutzermodul(e) an mindestens ein zweites Übertragungsmodul.

6. Computerprogrammprodukt, das von einem Kommunikationsnetzwerk fernladbar und/oder auf einem von einem Computer lesbaren Träger aufgezeichnet und/oder von einem Prozessor ausführbar ist, **dadurch gekennzeichnet, dass** es Programmcodebefehle für den Einsatz des Verwaltungsverfahrens nach mindestens einem der Ansprüche 1 bis 5 umfasst.

7. Verwaltungsplattform für den Anschluss einer Vielzahl von Benutzermodulen (214, 224) an eine Vielzahl von Übertragungsmodulen (2011, 2021) einer Vermittlungsstelle (200) in einem optischen Zugangsnetzwerk (2000), wobei jedes Übertragungsmodul mit einem Paar von unterschiedlichen Wellenlängen verbunden ist, umfassend eine Sendewellenlänge und eine Empfangswellenlänge
**dadurch gekennzeichnet, dass** sie umfasst:
Mittel zur dynamischen Neuordnung des Anschlusses mindestens eines der Benutzermodule, umgeschwenktes Benutzermodul genannt, an mindestens eines der Übertragungsmodule in Abhängigkeit von mindestens einem vorbestimmten Optimierungskriterium, wobei die Mittel zur Neuordnung Mittel zum Umschwenken des Anschlusses des umgeschwenkten Benutzermoduls von einem Quellenübertragungsmodul auf ein Zielsübertragungsmodul in Abhängigkeit von dem mindestens einen vorbestimmten Optimierungskriterium umfasst,
Mittel, um die Sendewellenlänge und die Empfangswellenlänge des umgeschwenkten Benutzermoduls jeweils auf die Empfangswellenlänge und die Sendewellenlänge des Zielsübertragungsmoduls abzustimmen.

8. Vermittlungsstelle eines optischen Zugangsnetzes, **dadurch gekennzeichnet, dass** sie eine Verwaltungsplattform nach Anspruch 7 umfasst.

9. Optisches Zugangsnetz, **dadurch gekennzeichnet, dass** es eine Verwaltungsplattform nach Anspruch 7 umfasst.

## Claims

1. Method for managing the connection of a plurality of user modules (214, 224) to a plurality of transmission modules (2011, 2021) of an exchange (200) in an optical access network (2000), each transmission module being associated with a pair of distinct wavelengths comprising an emitting wavelength and a receiving wavelength,
**characterized in that** it comprises a step for the dynamic rearrangement of the connection of at least one of said user modules, known as a switched user module, to at least one of said transmission modules depending on at least one predetermined optimization criterion, said rearrangement step comprising a step for switching the connection of said switched user module from a source transmission module to a target transmission module, depending on said at least one predetermined optimization criterion,
and **in that** the emitting wavelength and the receiving wavelength of the switched user module are tuned to the receiving wavelength and the emitting wavelength, respectively, of the target transmission module.

2. Management method according to Claim 1, **characterized in that** said rearrangement step is carried out in the event of positive detection of at least one of the events belonging to the group comprising:
- introduction, in said access network, of a new user module (214, 224);
- introduction, in said access network, of a new transmission module (2011, 2021);
- request to modify a data rate associated with at least one user module (214, 224);
- detection of at least one data rate bottleneck for a transmission module;
- occurrence of a periodic event.

3. Management method according to either of Claims 1 and 2, **characterized in that** the rearrangement step furthermore comprises a step for acquiring a topology that is representative of the connection of each of the user modules (214, 224) to the transmission modules (2011, 2021) and **in that** said switching step is carried out depending on said at least one predetermined optimization criterion and on said acquired topology.

4. Management method according to any one of Claims 1 to 3, **characterized in that** for each connection of a new user module to the exchange (200), the new user module is initially connected to a transmission module by default.

5. Management method according to any one of Claims 1 to 4, **characterized in that**, in the event of malfunction of a first transmission module, it includes the following steps:
- selection, depending on at least one predetermined criterion, of at least one user module, known as (a) priority user module(s), connected to the first transmission module;
- connection of the at least one priority user module to at least one second transmission module.

6. Computer program product, able to be downloaded from a communication network and/or saved on a medium able to be read by computer and/or able to be executed by a processor, **characterized in that** it comprises program code instructions for implementing the management method according to at least one of Claims 1 to 5.

7. Platform for managing the connection of a plurality of user modules (214, 224) to a plurality of transmission modules (2011, 2021) of an exchange (200) in an optical access network (2000), each transmission module being associated with a pair of distinct wavelengths comprising an emitting wavelength and a receiving wavelength,
**characterized in that** it comprises:
means for the dynamic rearrangement of the connection of at least one of said user modules, known as a switched user module, to at least one of said transmission modules depending on at least one predetermined optimization criterion, said rearrangement means comprising means for switching the connection of said switched user module from a source transmission module to a target transmission module, depending on said at least one predetermined optimization criterion,
means for tuning the emitting wavelength and the receiving wavelength of the switched user module to the receiving wavelength and the emitting wavelength, respectively, of the target transmission module.

8. Exchange of an optical access network, **characterized in that** it comprises a management platform according to Claim 7.

9. Optical access network, **characterized in that** it comprises a management platform according to Claim 7.
